# EUROPEAN PATENT APPLICATION

(11) **EP 2 670 153 A2**
(43) Date of publication of application: **04.12.2013**
(21) Application number: 12195262.6
(22) Date of filing: 03.12.2012
(51) Int. Cl.: H04N 21/4147, H04N 21/439, H04N 21/44, H04N 21/462, H04N 21/482

(54) **Reproducing device and reproducing method**

(30) Priority: 30.05.2012 JP 2012123080
(71) Applicant: Kabushiki Kaisha Toshiba, Tokyo 105-8001 (JP)
(72) Inventor: Tsutsumitake, Hideyuki, Tokyo, 105-8001 (JP)
(74) Representative: HOFFMANN EITLE

(57) **Abstract**

According to one embodiment, a reproducing device (101) includes: a receiver (105); a reproducer (114); and a display controller (108, 112). The receiver (105) is configured to receive video data. The reproducer (114) is configured to reproduce a video based on the received video data while the video data is being received. The display controller (108, 112) is configured to display the reproduced video on a display (115A), to display a search result based on a search criterion for search on the display (115A) if the search criterion is received while the video is being reproduced, and to stop reproducing the video at least partially during a time period for which the search result is displayed.

## Description

### FIELD

Embodiments described herein relate generally to a reproducing device and a reproducing method.

### BACKGROUND

There has been utilized a display apparatus or a display method in which, when a search criteria for related information related to video and/or sound reproduced from broadcasting data is input by a user in order to search the related information while the video and/or sound is being output, a website on the Internet is accessed so as to display the information related to the video and/or sound reproduced from broadcast data.

When a website is accessed and related information is displayed on an entire screen of a display apparatus while video and/or sound reproduced based on broadcast data are being output, it may be difficult to view and listen to the video that are being output and the video output while related information is displayed cannot be viewed. Therefore, after checking the related information displayed on a display apparatus, a user is required to perform operations such as, for example: to restart reproduction of the video and/or sound from a point at which the reproduction is stopped; to record broadcast data for the time period during which the related information is being checked. Such operations cause inconvenience for the user. Here, it can be considered to reduce the size of the video reproduced from broadcast data and to display the reduced size video on a screen of a display apparatus, as well as to display related information around the reduced size video (at an area on the screen of the display apparatus where the reduced size video is not displayed). However, it is difficult to view the related information at the same time as the video reproduced from broadcast data. Especially when the related information includes a video, it is difficult to view the related information at the same time as the video reproduced from broadcast data.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a configuration of a television receiver to which a reproducing device and a reproducing method are applied, according to an embodiment;
FIG. 2 is an exemplary flowchart of processing for reproducing video data contained in contents in the television receiver in the embodiment;
FIG. 3 is an exemplary diagram of a screen displayed on a display of the television receiver in the embodiment;
FIG. 4 is another exemplary diagram of the screen displayed on the display of the television receiver in the embodiment;
FIG. 5 is still another exemplary diagram of the screen displayed on the display of the television receiver in the embodiment; and
FIG. 6 is still another exemplary diagram of the screen displayed on the display of the television receiver in the embodiment.

### DETAILED DESCRIPTION

In general, according to one embodiment, a reproducing device comprises: a receiver; a reproducer; and a display controller. The receiver is configured to receive video data. The reproducer is configured to reproduce a video based on the received video data while the video data is being received. The display controller is configured to display the reproduced video on a display, to display a search result based on a search criterion for search on the display if the search criterion is received while the video is being reproduced, and to stop reproducing the video at least partially during a time period for which the search result is displayed.

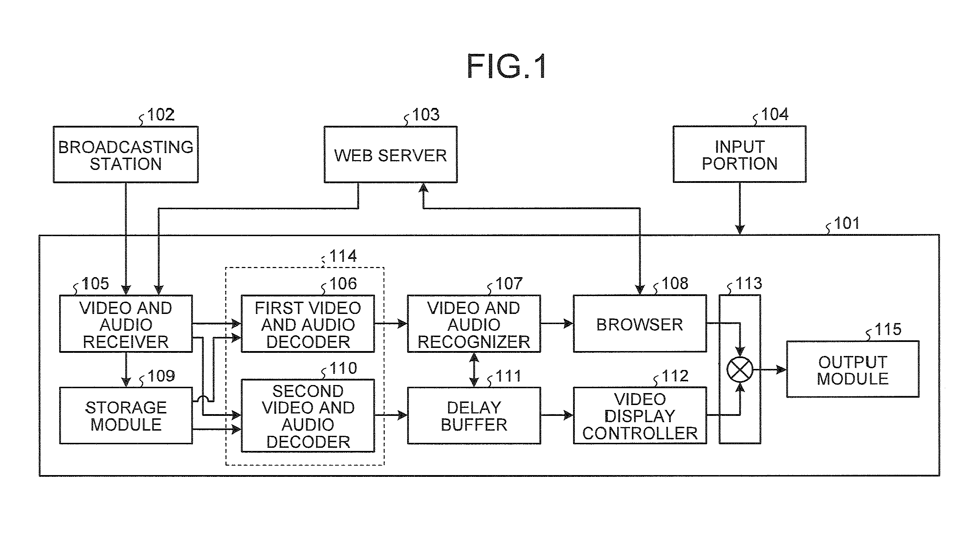

A television receiver as a reproducing device according to an embodiment is described. FIG. 1 is a block diagram of a configuration of the television receiver to which a reproducing device and a reproducing method according to the embodiment are applied.

A television receiver 101 is a reproducing device that receives contents transmitted from a broadcasting station 102, a web server 103, etc., and reproduces videos and sound based on the received contents. The television receiver 101 is controlled by control signals input from an input module 104 such as a remote controller, a keyboard, a mouse, or a touchpad.

In the embodiment, the television receiver 101 comprises a video and sound receiver 105, a video and audio recognizer 107, a browser 108, a storage module 109, a delay buffer 111, a video display controller 112, a synthesizer 113, a reproducer 114, and an output module 115.

The video and sound receiver 105 receives contents from an external device such as the broadcasting station 102 or the web server 103. Here, the contents include video data (video stream), sound data, etc. In the embodiment, the video and sound receiver 105 has a video-on-demand function for sending transmission signals ordering the web server 103, which stores contents, to transmit contents, and receiving contents transmitted from the web server 103 in response to the transmission signals. Moreover, the video and sound receiver 105 has a live broadcast receiving function for receiving contents transmitted to many and unspecified recipients unilaterally and simultaneously from the broadcasting station 102.

The reproducer 114 reproduces, while the video and sound receiver 105 is receiving contents, videos based on video data contained in the received contents. Moreover, the reproducer 114 reproduces, while the video and sound receiver 105 is receiving contents, sound based on sound data contained in the received contents.

In the embodiment, the reproducer 114 is provided with a plurality of decoders (first video and audio decoder 106, second video and audio decoder 110) decoding video data and sound data contained in received contents to generate (reproduce) videos and sound. The reproducer 114 generates videos and sound using both the first video and audio decoder 106 and second video and audio decoder 110 or either of them, depending on contents reception condition of the video and sound receiver 105.

For example, when the video data and sound data contained in the contents received from the broadcasting station 102 are decoded, the reproducer 114 can estimate what size of storage module capacity the delay buffer 111 needs to have so as to output, at the same time, generated videos and sound and character string candidates to be searched because a bit rate of video data and sound data to be decoded is set preliminarily. Here, the character string candidates are recognized based on the generated videos and sound, and used for searches. Therefore, when decoding video data and sound data contained in contents received from the broadcasting station 102, the reproducer 114 decodes the contents received from the broadcasting station 102 using the second video and audio decoder 110 to generate videos and sound, and stores the generated videos and sound in the delay buffer 111.

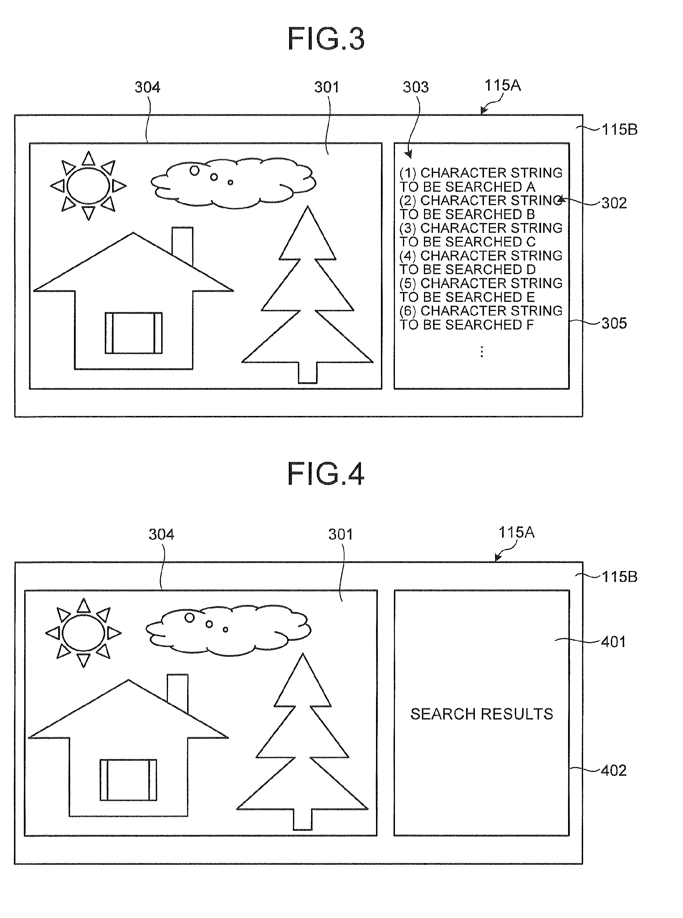

On the other hand, when decoding video data and sound data contained in contents received from the web server 103, the reproducer 114 is required to decode video data and sound data with various resolutions and bit rates. This involves, for example, the change of the size of the delay buffer 111 in accordance with video data and sound data contained in received contents, and thus complicates the control of the delay buffer 111. Therefore, in the embodiment, two decoders (first video and audio decoder 106, and second video and audio decoder 110) of the reproducer 114 are functionally classified into: a decoder for generating videos and sound for display on a display 115A (see FIG. 3) (second video and audio decoder 110); and a decoder for generating videos and sound for recognition of character string candidates (first video and audio decoder 106). The reproducer 114 controls the video and sound receiver 105 to receive contents used to generate videos and sound for display and contents used to generate videos and sound for recognition from the web server 103 with a time lag. That is, the reproducer 114 controls the video and sound receiver 105 to receive contents used to generate videos and sound for recognition prior to contents used to generate videos and sound for display. In this manner, it is possible to output, at the same time, generated videos and sound and the character string candidates, even if the delay buffer 111 is not used.

When videos and sound are generated using two decoders, videos and sound for recognition themselves do not need to be output. Therefore, when receiving contents from the web server 103 with the video on demand function, the reproducer 114 controls the video and sound receiver 105 to receive contents of a codec placing a smaller load on the decoders among contents of various resolutions, bit rates, and codecs. This makes it possible to reduce a load on the decoders.

The video and audio recognizer 107 serves as a recognizer recognizing, from reproduction results by the reproducer 114, character string candidates that are used for searches. In the embodiment, when contents are received from the broadcasting station 102 through the video and sound receiver 105, the video and audio recognizer 107 recognizes the character string candidates based on the videos and sound that are generated by the second video and audio decoder 110 and stored in the delay buffer 111. On the other hand, when contents are received from the web server 103 through the video and sound receiver 105, the video and audio recognizer 107 recognizes character string candidates based on videos and sound that are generated by the first video and audio decoder 106. To be more specific, when the video and audio recognizer 107 recognizes character string candidates based on the videos, it image-recognizes characters contained in the videos as character string candidates. When the video and audio recognizer 107 recognizes character string candidates based on sound, it sound-recognizes character string candidates based on the sound.

The browser 108 is a web browser used for browsing information on the Internet. The browser 108 displays the character string candidates that are recognized by the video and audio recognizer 107 as input-allowed search criteria on the display 115A (see FIG. 3). Moreover, when a user selects (inputs) one of the character string candidates displayed on the display 115A, the browser 108 accesses the web server 103 so that search results based on the selected character string candidate are displayed on the display 115A (see FIG. 3).

While the browser 108 displays search results based on the search criteria on the display 115A with the character string candidate selected by the user from among the character string candidates recognized by the video and audio recognizer 107 as search criteria in the present embodiment, the embodiment is not limited thereto. For example, the browser 108 may output, when search criteria are input through the input module 104, search results based on the search criteria input through the input module 104 to the output module 115.

The video display controller 112 displays the videos reproduced by the reproducer 114 on the display 115A (see FIG. 3). Moreover, the video display controller 112 causes the output module 115 to output the sound reproduced by the reproducer 114. In the embodiment, the video display controller 112 outputs the videos and sound generated by the second video and audio decoder 110 to the output module 115. When the video and sound receiver 105 receives contents from the broadcasting station 102, the video display controller 112 outputs the videos and sound stored in the delay buffer 111 to the output module 115.

On the other hand, when the video and sound receiver 105 receives contents from the web server 103, contents used to generate videos and sound for display and contents used to generate videos and sound for recognition are received with a time lag. Thus, the video display controller 112 outputs the videos and sound generated by the second video and audio decoder 110 to the output module 115 without the delay buffer 111 interposed.

The delay buffer 111 delays timing at which the video display controller 112 outputs the videos and sound reproduced by the reproducer 114 to the output module 115 by a time required for recognizing character string candidates based on the videos and sound reproduced by the reproducer 114 (hereinafter referred to as a "delay time"). Thus, it is possible to output, in synchronization with the output of the videos and sound reproduced by the reproducer 114 to the output module 115, character string candidates that are recognized based on the videos and sound to the output module 115. That is to say, the delay buffer 111 serves as a controller for outputting, in synchronization with the output of the character string candidates recognized by the video and audio recognizer 107 to the output module 115, the videos in which the character string candidates are recognized to the output module 115. The delay time is set in accordance with the time required for the video and audio recognizer 107 to recognize the character string candidates based on reproduced videos and sound.

The storage module 109 is configured by a hard disk drive (HDD), for example, and stores contents received from the broadcasting station 102 through the video and sound receiver 105. In the embodiment, when the reproduction by the reproducer 114 is stopped while the video and sound receiver 105 is receiving contents from the broadcasting station 102, the storage module 109 realizes a function of storing contents received while the reproduction is stopped (time shift function). When contents are stored in the storage module 109 with the time shift function, the reproducer 114 (second video and audio decoder 110) reproduces videos and sound based on the video data and sound data contained in the contents stored in the storage module 109. Therefore, a user of the television receiver 101 can view videos and listen to sound based on the video data and the sound data contained in the contents received while the reproduction is stopped, when the reproduction of contents received from the broadcasting station 102 is restarted.

Contents received while the reproduction is stopped are stored in the storage module 109 of the television receiver 101 in the present embodiment; however, the embodiment is not limited thereto. For example, a cloud, which is a service on the Internet, may store contents received while the reproduction is stopped.

The synthesizer 113 synthesizes the character string candidates (search criteria) or the search results that are output from the browser 108 and the videos output from the video display controller 112, and outputs the resulting videos to the output module 115.

The output module 115 comprises the display 115A (see FIG. 3) configured by a liquid crystal display (LCD), for example, and a speaker. The display 115A displays the character string candidates (search criteria) or the search results that are output from the browser 108, and the videos output from the video display controller 112. The speaker outputs sound output from the video display controller 112 as audible sound.

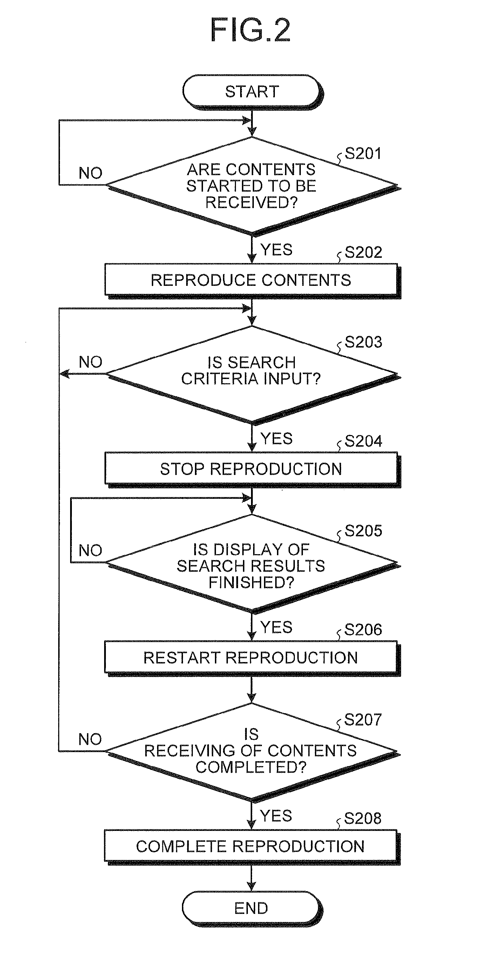

Next, with the use of FIGS. 2 to 6, the processing flow of reproducing video data contained in contents received by the video and sound receiver 105 is described. FIG. 2 is a flowchart of a processing flow for reproducing video data contained in contents in the television receiver in the embodiment.

Once the video and sound receiver 105 starts receiving contents (Yes at S201), the reproducer 114 reproduces videos based on video data contained in the received contents (S202). When the received contents include sound data, the reproducer 114 also reproduces sound based on sound data contained in the received contents.

In the embodiment, once the reproducer 114 starts reproducing videos, the video and audio recognizer 107 recognizes character string candidates to be searched, from reproduction results by the reproducer 114. Then, the browser 108 displays, on the display 115A, the recognized character string candidates as search criteria that can be input, through the synthesizer 113. The video display controller 112 controls so that the output module 115 outputs videos reproduced by the reproducer 114, through the synthesizer 113.

FIG. 3 is a diagram of an example of a screen displayed on the display of the television receiver in the embodiment. When the reproducer 114 starts reproducing the videos, the video display controller 112 and the browser 108 display, on the display 115A, a display screen 115B on which (i) a video 301 reproduced by the reproducer 114 is displayed at a video display area 304 and (ii) character string candidates 302 to be searched (character strings A to F, for example) that are recognized by the video and audio recognizer 107 and identification numbers 303 identifying the character string candidates 302 are displayed at search criteria display area 305, as illustrated in FIG. 3. A user of the television receiver 101 can select, from among the character string candidates 302 displayed on the display screen 115B, a character string candidate 302 that is intended to be input as a search criterion by inputting the identification number 303 corresponding thereto with the input module 104.

It is supposed that the browser 108 displays, at the higher level, those character string candidates 302 that are highly associated with the video 301 displayed on the display 115A when the character string candidates 302 that are recognized by the video and audio recognizer 107 are displayed on the display 115A. Here, the association degree indicates the degree of association between a character string candidate 302 and the video 301, and is calculated based on the number of times the video and audio recognizer 107 repeatedly recognizes a character string candidate 302 in the video 301, the number of similar character string candidates among the character string candidates recognized by the video and audio recognizer 107, etc. Alternatively, the browser 108 may calculate the association degree between the displayed video 301 and each of the recognized character string candidates 302 using meta-information (program title, broadcasting station name, a performer name, time, for example) of the contents on which the displayed video 301 is based. Then, the browser 108 displays the character string candidates 302 on the display 115A in descending order of the association degree calculated. It is supposed that the browser 108 changes the character string candidates 302 displayed on the display 115A as the video 301 displayed on the display 115A is changed with time.

In the embodiment, the browser 108 displays the character string candidates 302 on the display 115A in descending order of the association degree between each of the candidates and the video 301 displayed on the display 115A. However, the order is not limited thereto. For example, the browser 108 may display the character string candidates 302 on the display 115A in order of recognition of each of the candidates by the video and audio recognizer 107.

Returning to FIG. 2, the video display controller 112 determines whether any search criterion is input while videos are reproduced (S203). In the embodiment, the video display controller 112 determines that search criteria are input when an identification number 303 identifying a character string candidate 302, from among the character string candidates 302 displayed on the display 115A, is input through the input module 104.

Once any search criterion is input (Yes at S203), the video display controller 112 stops reproduction of videos based on video data contained in the received contents (S204). When the received contents include sound data, the video display controller 112 also stops reproduction of sound based on the sound data contained in the received contents.

Here, if the contents including video data for which the reproduction thereof has been stopped by the video display controller 112 are the contents received from the broadcasting station 102, a user becomes unable to view and listen to the contents transmitted from the broadcasting station 102 when the transmission of the contents from the broadcasting station 102 ends while the reproduction has been stopped. Therefore, when the reproducer 114 stops the reproduction, the video and sound receiver 105 performs the time shift function for storing contents received from the broadcasting station 102 while the reproduction of videos is stopped, in the storage module 109. Thus, videos based on video data contained in the contents stored in the storage module 109 are reproduced when the reproduction by the reproducer 114 is restarted, which allows a user to view and listen to the contents transmitted from the broadcasting station 102 while the reproduction is stopped.

On the other hand, when the contents including video data for which the reproduction thereof is stopped by the video display controller 112 are contents received from the web server 103, the video and sound receiver 105 sends, to the web server 103, transmission signals ordering the web server 103 to stop transmission of contents when the reproducer 114 stops reproduction, so that the transmission of contents is stopped. In addition, the video and sound receiver 105 sends, to the web server 103, transmission signals ordering the web server 103 to transmit contents when the reproducer 114 restarts reproduction so that contents are transmitted. Therefore, when contents including video data for which the reproduction thereof is stopped by the reproducer 114 are contents received from the web server 103, it is not necessary that the video and sound receiver 105 stores the contents received from the web server 103 in the storage module 109.

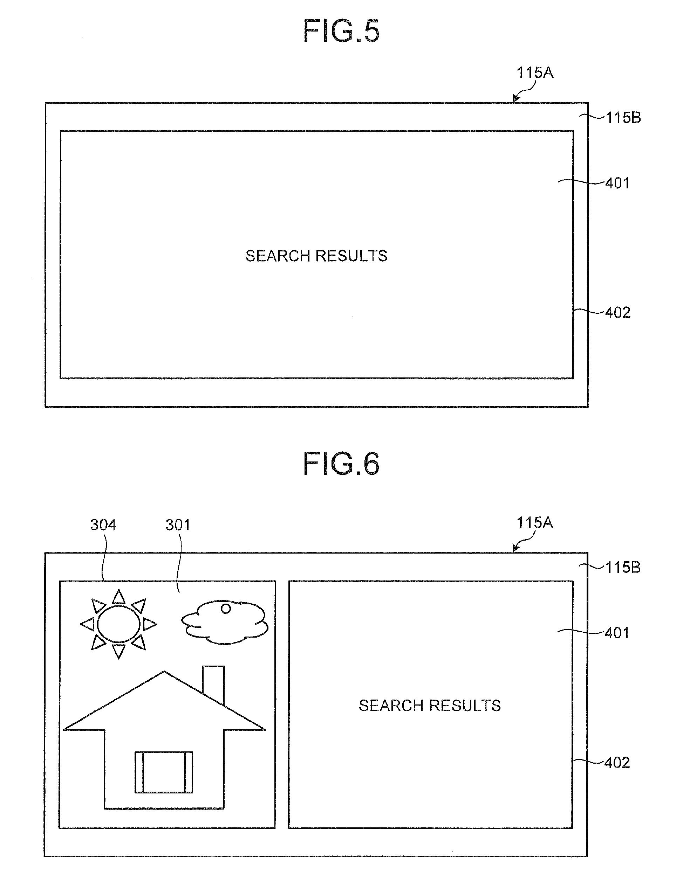

When the search criteria are received, the video display controller 112 and the browser 108 display, on the display 115A, the display screen 115B in which the video 301 being displayed on the display 115A at the time when the reproduction is stopped is displayed at the video display area 304 and search results 401 based on the input search criteria are displayed at a search result display area 402, as illustrated in FIG. 4. Moreover, the video display controller 112 and the browser 108 may display, on the display 115A, the display screen 115B in which the search result display area 402 is arranged over the entire face without the video 301 being displayed on the display 115A at the time when the reproduction is stopped, as illustrated in FIG. 5. Furthermore, the video display controller 112 and the browser 108 can arbitrarily change the proportion between the video display area 304 and the search result display area 402 that are displayed on the display 115A at the time when the reproduction is stopped, as illustrated in FIG. 4 and FIG. 6.

In the embodiment, when search criteria are received while videos are being reproduced, the video display controller 112 and the browser 108 stop reproduction of videos by the reproducer 114. However, the embodiment is not limited thereto as long as the reproduction of videos by the reproducer 114 is stopped at least while the search results are displayed. For example, the video display controller 112 and the browser 108 may stop reproducing the videos by the reproducer 114 when search criteria are input or search results are displayed. In the embodiment, the time at which search results are displayed is the time at which the display of search results is started. The video display controller 112 and the browser 108 may stop reproduction of videos by the reproducer 114 when search processing is performed based on search criteria input.

In the embodiment, the video display controller 112 and the browser 108 continue to stop the reproduction of videos by the reproducer 114 while search results are displayed. However, it is only necessary that the reproduction of videos by the reproducer 114 is stopped at least partially during a time period for which the search results are displayed. For example, the video display controller 112 and the browser 108 may stop the reproduction of videos by the reproducer 114 after a given time (two seconds later, for example) elapsed since the display of search results is started.

Returning to FIG. 2, while search results are displayed on the display 115A through the browser 108, the reproducer 114 determines if the display of search results is completed (S205). In the embodiment, the reproducer 114 determines that the display of search results is finished when control signals ordering the completion of display of search results is input from the input module 104.

After the display of search results is finished (Yes at S205), the reproducer 114 restarts the reproduction of videos from a stop position at which the reproduction of videos is stopped (S206). When the contents including videos for which the reproduction thereof is stopped include sound data, the reproducer 114 restarts reproduction of sound from the stop position at which the reproduction of sound is stopped. In the embodiment, the reproducer 114 restarts the reproduction of videos from a point a given time prior to the stop position at which the reproduction of videos is stopped. Thus, even if a user forgets the contents of videos right at the stop position at which the reproduction of videos is stopped, the user can check videos again from the point prior to the stop potion, and view the videos recalling the contents thereof. Moreover, while the reproducer 114 restarts the reproduction of videos from a point a given time prior to the stop position at which the reproduction of videos is stopped in the embodiment, the embodiment is not limited thereto. The reproducer 114 may restart reproduction of videos from the stop position.

To be more specific, when the contents including videos for which the reproduction thereof is stopped are contents received from the broadcasting station 102, the reproducer 114 restarts reproduction of the videos based on video data contained in the contents stored in the storage module 109 while the reproduction of videos is stopped. In this manner, it is possible to view and listen to the contents transmitted from the broadcasting station 102 while reproduction of the videos is stopped. In addition, while the reproducer 114 reproduces videos based on video data stored in the storage module 109 and until the reproduction of the vides based on the video data stored in the storage module 109 is completed, the reproducer 114 reproduces the videos at a second reproduction speed (1.2 times faster, for example) that is faster than a normal reproduction speed and at which a user (an operator) can recognize the contents of the videos. Here, the normal reproduction speed is a speed at which the videos are reproduced in synchronization with the receiving of the contents (video data). In this manner, when the reproduction of videos based on video data contained in contents received from the broadcasting station 102 is restarted, it is possible to gradually shorten a time gap between videos reproduced by the reproducer 114 and videos based on video data contained in contents currently being received from the broadcasting station 102. Furthermore, when the reproduction of videos by the reproducer 114 is restarted, the video display controller 112 may display, on the display 115A, an elapsed time (reproduction delay time) from when the video data (contents) for which the reproduction thereof is to be restarted is received and until when the reproduction of the video data is begun to be reproduced. Thus, a user of the television receiver 101 can recognize how much delay exists until the videos currently being viewed is reproduced since the broadcasting station 102 transmits them.

On the other hand, when the contents including video for which the reproduction thereof is stopped are the contents received from the web server 103, the reproducer 114 controls the video and sound receiver 105 to restart receiving of the contents from the stop position at which the reproduction is stopped, so as to restart reproduction of the videos from the stop position.

Next, the reproducer 114 determines whether the video and sound receiver 105 finishes receiving the contents (S207). When the reception of contents is to be continued (No at S207), the reproducer 114 returns to of S203. On the other hand, when the receiving of contents is completed (Yes at S207), the reproducer 114 stops reproducing the contents (S208). Here, when video data on which videos being reproduced are based is contained in the contents stored in the storage module 109, the reproducer 114 continues reproducing videos based on the video data contained in the contents stored in the storage module 109 until the reproduction thereof is completed.

In the embodiment, once search criteria are received, the video display controller 112 stops reproducing the videos that has been reproduced based on video data contained in received contents. However, the configuration may be such that whether the reproduction of the videos is to be stopped is arbitrarily set when the search criteria are received.

In the television receiver 101 according to the embodiment described above, video data is received from the broadcasting station 102, the web server 103, etc., and while the video data is being received, videos based on the received video data are reproduced. Then, the reproduced videos are displayed on the display and, when search criteria used for search(s) are received while the videos are being reproduced, search results based on the search criteria are displayed on the display. Here, the reproduction of videos is stopped at least partially during a time period for which the search results are displayed. Thus, the reproduction of videos based on video data is automatically stopped when search criteria are received. Therefore, a user is not required to perform operations for stopping reproduction of videos, thereby enhancing user convenience.

A computer program to be executed in the television receiver 101 in the embodiment is preliminarily embedded in a read only storage module (ROM), etc., and then provided. The program to be executed in the television receiver 101 in the embodiment may be recorded, as a file whose format is installable or executable, in a computer readable recording medium such as a compact disk read only storage module (CD-ROM), a flexible disk (FD), a compact disk recordable (CD-R), or a digital versatile disk (DVD), and then provided.

The program to be executed in the television receiver 101 in the embodiment may be stored in a computer connected to a network such as the Internet, and then provided by download thereof through the network. Alternatively, the program to be executed in the television receiver 101 in the embodiment may be provided or distributed through a network such as the Internet.

The program executed in the television receiver 101 in the embodiment is of module configuration comprising the modules described above (video and sound receiver 105, reproducer 114, video and audio recognizer 107, browser 108, video display controller 112). As actual hardware, a central processing unit (CPU: processor) reads out the program from the ROM and executes it, so that the above-mentioned each module is loaded on a main storage module, and the video and sound receiver 105, the reproducer 114, the video and audio recognizer 107, the browser 108, and the video display controller 112 are generated on the main storage module.

While the case in which the reproducing device and the reproducing method according to the embodiment are applied to the television receiver 101 has been described, the embodiment can be also applied to hard disk recorders, for example.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A reproducing device (101) comprising:
a receiver (105) configured to receive video data;
a reproducer (114) configured to reproduce a video based on the received video data while the video data is being received; and
a display controller (108, 112) configured to display the reproduced video on a display (115A), to display a search result based on a search criterion for search on the display (115A) if the search criterion is received while the video is being reproduced, and to stop reproducing the video at least partially during a time period for which the search result is displayed.

2. The reproducing device (101) of Claim 1, wherein the display controller (108, 112) is configured to stop reproducing the video if the search criterion is received or if the search result is displayed.

3. The reproducing device (101) of Claim 2, wherein the reproducer (114) is configured to restart reproducing the video from a stop position at which the reproduction of the video is stopped, after the displaying of the search result is completed.

4. The reproducing device (101) of Claim 2 or 3, further comprising:
a recognizer (107) configured to recognize a character string candidate to be searched used for search from a reproduction result of the reproducer (114), wherein
the receiver (105) is configured to receive sound data,
the reproducer (114) is configured to reproduce sound based on the received sound data in synchronization with the receipt of the sound data, and
the display controller (108, 112) displays, on the display (115A), the character string candidate as the search criterion that is capable of being received.

5. The reproducing device (101) of Claim 4, wherein the display controller (108, 112) displays the video in which the character string candidate is recognized on the display (115A) in synchronization with the displaying of the character string candidate on the display (115A).

6. The reproducing device (101) of one of Claims 1 to 5, wherein
the receiver (105) is configured to store the video data received while the reproduction of the video is being stopped in a storage module (109), if the reproduction of the video is stopped, and
the reproducer (114) is configured to restart reproducing the video based on the video data stored in the storage module (109), after the displaying of the search result is completed.

7. The reproducing device (101) of Claim 4 or a claim dependent on Claim 4, wherein the reproducer (114) is configured to reproduce the video based on the video data stored in the storage module (109) at a second reproduction speed that is faster than a normal reproduction speed and at which an operator can recognize contents of the video, while the video is being reproduced based on the video data stored in the storage module (109) and until the reproduction of the video based on the video data stored in the storage module (109) is completed.

8. The reproducing device (101) of Claim 7, wherein the display controller (112) displays, on the display (115A), a reproduction delay time from when the video data of the video for which the reproduction thereof is to be restarted is received and until when the video data is begun to be reproduced.

9. A reproducing method comprising:
receiving video data;
reproducing, while the video data is being received, a video based on the received video data; and
displaying the reproduced video on a display (115A), displaying, when a search criterion used for search is input while the video is being reproduced, a search result based on the search criterion on the display (115A), and stopping reproduction of the video at least partially during a time period for which the search result is displayed.
